(19)

Europäisches
Patentamt
European
Patent Office
Office européen
des brevets

(11) **EP 3 800 486 B1**

(12) **EUROPEAN PATENT SPECIFICATION**

(45) Date of publication and mention
of the grant of the patent:
**26.06.2024 Bulletin 2024/26**

(21) Application number: **19306280.9**

(22) Date of filing: **04.10.2019**

(51) International Patent Classification (IPC):
**G01S 13/76** *(2006.01)*    **G01S 7/02** *(2006.01)*

(52) Cooperative Patent Classification (CPC):
**G01S 7/023; G01S 13/765**

(54) **TIME OF FLIGHT MEASUREMENT FOR DISTANCE ESTIMATION WITH INTERFERENCE TOLERANCE PARAMETERS**

FLUGZEITMESSUNG ZUR ABSTANDSSCHÄTZUNG MIT INTERFERENZTOLERANZPARAMETERN

MESURE DE LA DURÉE DE VOL POUR UNE ESTIMATION DE LA DISTANCE À L'AIDE DE PARAMÈTRES DE TOLÉRANCE D'INTERFÉRENCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.04.2021 Bulletin 2021/14**

(73) Proprietor: **NXP USA, Inc.**
**Austin TX 78735 (US)**

(72) Inventors:
 • **Waheed, Khurram**
  **31023 Toulouse Cedex 1 (FR)**

 • **Neri Castellanos, Carlos Alberto**
  **31023 Toulouse Cedex 1 (FR)**
 • **Revardel, Luc**
  **31023 Toulouse Cedex 1 (FR)**

(74) Representative: **Miles, John Richard**
**NXP SEMICONDUCTORS**
**Intellectual Property Group**
**Abbey House**
**25 Clarendon Road**
**Redhill, Surrey RH1 1QZ (GB)**

(56) References cited:
**US-A1- 2003 007 473    US-A1- 2007 019 771**
**US-A1- 2019 181 909**

## Description

BACKGROUND

Field of the Disclosure

The present disclosure relates generally to wireless communications and more particularly to wireless ranging and localization.

Description of the Related Art

Wireless ranging and localization (referred to herein as wireless ranging for simplicity) is used in a variety of applications, including car and home access systems, security parameter enforcement, asset tracking systems, proximity sensors, gaming applications, security applications, and others. To support wireless ranging between two devices, a system employs a radio at each device, with one device communicating an initial packet to the other device, and with the other device responding with a return packet. Based on the time at which the initial packet was transmitted and the time at which the return packet is received, the transmitting device can calculate a time-of-flight (ToF) of the packets and, based on the ToF, determine a distance (range) between the two devices. The determined distance can be employed for a variety of functions, such as taking a specified action (e.g., granting secure access to a location or device, such as a car) when the distance is below a threshold.

Conventional wireless ranging systems can be negatively impacted by wireless interference. For example, interference can result in packets not being received as expected at one of the two devices. This failure to receive packets can cause consumption of a relatively high amount of power as the device continues to await reception, and can further lead to a poor user experience due to delays in getting a valid measurement or reduced performance in distance tracking applications.

US 2003/0007473 A1 discloses a method and apparatus to identify tags in a wireless tag identification system. Operation of the wireless tag identification system may be controlled to minimize interference or otherwise improve interoperation with a wireless communication system, such as a wireless local area network (WLAN). For example, the timing and/or power of wireless signals produced by the wireless tag identification system can be controlled to provide sufficient space to the wireless communication system to operate properly.

US 2019/0181909 A1 discloses a receiver device that may include: a receiver circuit configured to receive a data packet according to a data format on a predetermined radio frequency, wherein the data format comprises a parameter indicating a number of retries of transmission of the data packet; a determination circuit configured to determine whether the parameter is higher than a pre-determined threshold; and a frequency changer circuit configured to change a frequency on which the receiver receives data based on the determination.

US 2007/0019771 A1 discloses communication protocol in a wireless network of a transceiver and a plurality of devices, in which at least one device is a bidirectional device, and in which one or more other devices can be unidirectional devices.

BRIEF DESCRIPTION OF THE DRAWINGS

The present disclosure may be better understood, and its numerous features and advantages made apparent to those skilled in the art by referencing the accompanying drawings. The use of the same reference symbols in different drawings indicates similar or identical items.

FIG. 1 is a block diagram of a wireless ranging system that employs interference tolerance parameters in conjunction with a multi-stage wireless ranging protocol in accordance with at least one embodiment.

FIG. 2 is a diagram illustrating an example of a portion of a data collection stage of the multi-stage wireless ranging protocol at the wireless ranging system of FIG. 1 in accordance with at least one embodiment.

FIG. 3 is a diagram illustrating an example of another portion of a data collection stage of the multi-stage wireless ranging protocol at the wireless ranging system of FIG. 1 in accordance with at least one embodiment.

FIG. 4 is a block diagram of a portion of a wireless radio module of the wireless ranging system of FIG. 1 in accordance with at least one embodiment.

FIG. 5 is a block diagram illustrating the relationship of different stages of the multi-stage wireless protocol of the wireless ranging system of FIG. 1 in accordance with at least one embodiment.

FIG. 6 is a flow diagram of a method of executing a data collection stage and a preprocessing stage of a multi-stage wireless ranging protocol in accordance with at least one embodiment.

FIG. 7 is a flow diagram of a method of employing interference tolerance parameters with a multi-stage wireless ranging protocol in accordance with at least one embodiment.

FIG. 8 is a diagram of an example of the wireless ranging system of FIG. 1 employing interference tolerance parameters in accordance with at least one embodiment.

FIG. 9 is a diagram of another example of the wireless ranging system of FIG. 1 employing interference tolerance parameters in accordance with at least one embodiment.

FIG. 10. is a diagram of still another example of the wireless ranging system of FIG. 1 employing interference tolerance parameters in accordance with at least one embodiment.

FIG. 11 is a diagram of yet another example of the wireless ranging system of FIG. 1 employing interference tolerance parameters in accordance with at least one embodiment.

DETAILED DESCRIPTION

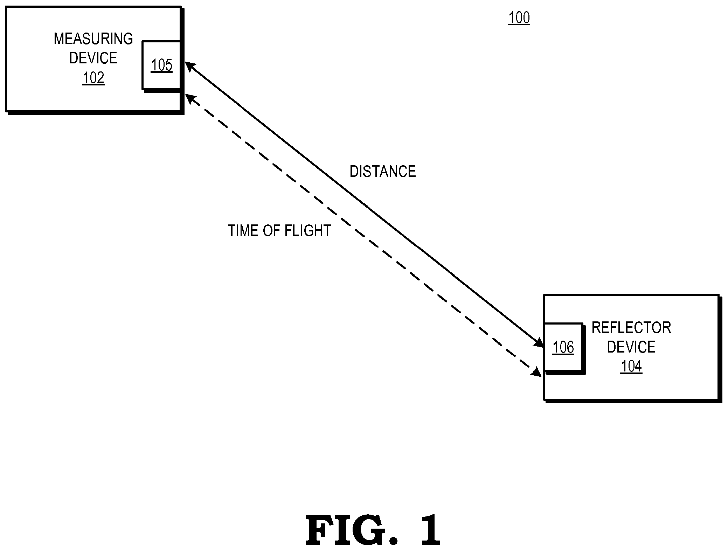

FIGs. 1-11 illustrate techniques for employing interference tolerance parameters in a wireless ranging system to reduce the effects of wireless interference on device performance (e.g. power consumption). As part of a wireless ranging session, each device identifies one or more wireless ranging parameters that indicate one or more limits (e.g. time limits, sample limits, and the like) corresponding to different portions of the ranging session. For example, the interference tolerance parameters can indicate a maximum duration of the wireless ranging session, a maximum number of allowed "retries" for packet transmission or reception at each of plurality of packet transmission frequencies, and the like. In response to a limit indicated by the interference tolerance parameters being reached prior to completion of the wireless ranging session, the wireless ranging system can take remedial action, such as terminating the wireless ranging session, changing a transmission frequency for transmission of the ranging packets, and the like. The wireless ranging system thereby reduces the impact of interference on system and device performance.

To illustrate via an example, in at least one embodiment the wireless ranging system performs ranging according to a "multi-stage" wireless ranging protocol, whereby the protocol includes at least three stages for each wireless ranging session: a data collection stage, a processing stage, and a reporting stage. During the data collection stage, the wireless ranging system collects multiple count samples based on the timing of communication of multiple test and return packets between a measuring device and a reflector device. During the processing stage, the measuring device uses the multiple count samples to calculate a plurality of ToF samples. In addition, during the processing stage, the measuring device can prune the ToF samples based on a statistical profile indicating the quality of each ToF sample to generate a pruned set of ToF samples, and combine (e.g., average) the pruned set of ToF samples to generate an effective ToF value. During the reporting stage, the measuring device identifies, based on the effective ToF value the distance between the measuring device and the reflector device. However, wireless interference can negatively impact the wireless ranging session by, for example, causing one or more of the test or return packets to not be received. Device performance can be negatively impacted in turn when, for example, the devices of the wireless ranging system either awaits the test to complete or waits for return packets indefinitely. In contrast, using the techniques described herein, a wireless ranging system can employ the interference tolerance parameters to place limits on the duration of one or more portions of each wireless ranging session, thereby improving device performance both in terms of power and throughput to guarantee a certain quality of service.

FIG. 1 illustrates a wireless ranging system 100 that includes a measuring device 102 and a reflector device 104. As described further herein, the wireless ranging system 100 is generally configured to determine a distance between the devices 102 and 104 by employing a multi-stage wireless ranging protocol. Accordingly, the wireless ranging system can be employed in a variety of applications and the devices 102 and 104 can be any of a variety of devices. For example, in at least one embodiment the measuring device 102 is an automobile, the reflector device 104 is a fob, and the distance identified by the wireless ranging system 100 is used to determine whether a user is in close proximity to the automobile to, for example, automatically unlock an automobile door. In another embodiment, the measuring device 102 is a sensor device located in a warehouse, the reflector device 104 is a sensor affixed to an asset to be tracked, and the distance identified by the wireless ranging system 100 is used to determine whether the asset has been removed from a warehouse shelf or other storage location. Thus, the wireless ranging system 100 can be employed in any of several applications to track the distance between two devices.

To support wireless ranging, the measuring device 102 and the reflector device 104 each include a wireless radio module, designated radio module 105 and radio module 106 respectively. The radio modules 105 and 106 are generally configured to transmit and receive packets according to one or more specified wireless protocols, such as Bluetooth-LE (BLE), IEEE 802.15.4, Gaussian frequency-shift keying (GFSK), Frequency shift keying (FSK) and Orthogonal QPSK protocols, and the like, or a custom wireless protocol. In at least one embodiment, in addition to the wireless ranging functions described further herein, the radio modules 105 and 106 are used to communicate other data between the devices 102 and 104 according to the corresponding wireless protocol. Such data can include, for example, device identification data, security data, multimedia data, and the like.

To implement wireless ranging, the measuring device 102 and the reflector device 104 together implement a multi-stage wireless ranging protocol including at least three stages for each wireless ranging session: a data collection stage, a processing stage, and a reporting stage. During the data collection stage, the measuring device 102 employs the wireless radio module 105 to transmit specified packets, referred to herein as ranging packets, to the reflector device 104. In response to receiving a ranging packet, the reflector device 104 employs the wireless radio module 106 to transmit a response packet. In addition, for each ranging packet and response packet, the measuring device 102 and the reflector device 104 maintain timing information that is employed during the processing and reporting stages to identify the distance between the devices 102 and 104.

To illustrate, and as described further below, the measuring device 102 and the reflector device 104 each include a corresponding free running counter controlled by a specified clock signal. Each time the wireless radio module 105 transmits a ranging packet or receives a response packet, the measuring device 102 stores a corresponding value (referred to herein as a count) of the respective counter. Further, each time the wireless radio module 106 receives a ranging packet or transmits a response packet, the reflector device 104 stores a corresponding count of the respective counter. The reflector device 104 communicates, via the response packets, the receive and transmit counts to the measuring device 102. Thus, during the data collection stage, the measuring device 102 records a plurality of counts corresponding to a plurality of ranging packet transmit times, a plurality of ranging packet receipt times, a plurality of response packets transmit times, and a plurality of response packet receive times. By collecting multiple count samples in this way, the measuring device can generate multiple ToF samples as described further below, improving ranging resolution and accuracy while using narrow-band radio signals.

During the processing stage, the measuring device 102 processes the count samples to 1) determine one or more statistical profiles for the count samples; 2) employ the one or more statistical profiles to prune low-quality count samples from the stored counts; 3) employ the pruned count samples to generate a plurality of ToF samples; and 4) combine (e.g., average) the pruned ToF samples to generate an effective ToF value. Each of these aspects is described further below. During the reporting stage, the measuring device 102 employs the effective ToF value to generate a distance (also referred to as a range) between the measuring device 102 and the reflector device 104 by, for example, multiplying the effective ToF value by a specified value corresponding to the transmission speed of the ranging and response packets (i.e., the speed of light).

By employing the above-described multi-stage ranging protocol, the wireless ranging system supports several improvements in wireless ranging, including improved resolution and precision for narrow-band wireless ranging, improved measurement time and processing efficiency, and improved security. For example, with respect to resolution and precision of wireless ranging, in at least one embodiment the radio modules 105 and 106 each employ a relatively precise time-stamp clock to generate the count samples, wherein the time-stamp clock is separate from and has a finer time resolution than a radio clock used by the radio link-layers and protocols to communicate data packets. To support improved precision, each time-stamp can be generated in response to a trigger that corresponds to a specific transmit or receive event, such as transmission of a specified bit, identifying a match of a packet address, and the like. Further, in at least one embodiment, the time-stamp clock and the radio clock are derived from a common reference clock to ameliorate drift between the two clocks.

In at least one embodiment, the resolution and precision of the wireless ranging is enhanced by employing an initial calibration measurement. During the calibration measurement, the measuring device 102 and the reflector device 104 are placed at a specified distance and wireless ranging is initiated. The resulting effective ToF will thereby indicate systematic packet propagation delays at the measuring device 102 and the reflector device 104. During the processing stage of subsequent wireless ranging measurements (after the calibration stage) the measuring device 102 can eliminate the systematic propagation delays from the ToF measurements by adjusting each ToF measurement by a calibration offset corresponding to the systematic packet propagation delays, thereby improving ranging resolution and precision. In at least one embodiment, the measuring device 102 can adjust for other delay variations during the processing stage, such as those resulting from automatic gain control (AGC) settings at one or more of the radio modules 105 and 106.

The data collection and processing stages can also support enhanced resolution and precision by enabling the reduction or elimination of low-quality ToF samples. For example, in at least one embodiment, during the processing stage the measuring device 102 employs one or more statistical data measures to determine the reliability of each ToF sample and eliminates those ToF samples identified as unreliable. Examples of such statistical measures include one or more of a mean, median, mode, minimum, maximum, centroid, medoid, variance, standard deviation, and the like. The measuring device 102 can also compute a quality metric for each ToF sample based on statistical and other constraints and eliminate those ToF samples having a quality metric below a threshold. In at least one embodiment, the quality metric is a statistical measurement derived from each ToF measurement that indicates the deviation of the ToF measurement from the selected statistical measure (e.g., the mean, the median, the mode, and the like). The measuring device 102 thus ensures that only reliable and high-quality ToF samples are employed to calculate the distance between the devices 102 and 104, thereby improving distance resolution and precision. Moreover, by employing a multi-stage protocol, the measurement time for multiple ToF samples is reduced, and the processing tasks for the data collection and processing stages can be divided among multiple processing units (e.g., multiple processors or processor cores), improving ranging efficiency and speed.

With respect to security, the multi-stage ranging protocol can support several security features. For example, in at least one embodiment the radio modules 105 and 106 employ frequency-hopping (e.g., pseudo-random frequency hopping) during the data collection stage, whereby the radio modules 105 and 106 change the frequency at which the range packets and response packets are communicated according to a specified frequency pattern. In at least one embodiment, the frequency pattern is a pseudo-random pattern that is communicated between the radio modules 105 and 106 prior to or during the data collection stage. In at least one embodiment, ranging security is supported by the radio modules 105 and 106 encrypting the ranging and response packets, respectively.

The multi-stage ranging protocol can further support interference tolerance parameters that establish limits (e.g., time limits) for one or more portions of the data collection stage. For example, the interference tolerance parameters can establish one or more of: 1) a total number of expected samples per wireless ranging session; 2) a number of samples to be exchanged for each frequency in the frequency pattern; 3) a maximum number of packet transmission retries at each frequency in the frequency pattern; and 4) a maximum duration of the wireless ranging session. Based on the interference tolerance parameters, the measuring device 102 can define one or more protocol timeouts. In response to a protocol timeout being exceeded, the measuring device 102 can take remedial action, such as changing to another frequency in the frequency pattern, terminating the wireless ranging session, notifying a user of a failed ranging measurement, placing the radio module 105 in a low-power mode, and the like.

To illustrate, in at least one embodiment, the measuring device 102 employs the maximum duration parameter to generate a Failed Communication Timeout (FCT) value. In particular, the measuring device 102 sets the FCT value to result in a timeout when the duration indicated by the maximum duration parameter is reached. In response to initiating the data collection stage, the measuring device 102 initiates a counter that indicates the duration of the data collection stage. In response to the counter reaching the FCT value prior to completion of the data collection stage, the measuring device 102 takes remedial action, such as sending a signal to the reflector device 104 to terminate the ranging session, reporting an error to a user of the measuring device 102, placing the radio 105 or other portions of the measuring device 102 in a low power mode, and the like.

In at least one embodiment, the measuring device 102 employs the maximum number of packet retries parameter to determine, at least in part, when to change frequencies in the frequency pattern. At each frequency in the pattern, the measuring device 102 and the reflector device 104 transmit and receive packets at the corresponding frequency. In response to not receiving a packet for a specified amount of time (as indicated by the interference tolerance parameters), the measuring device 102 and the reflector device resend the previous transmitted packet, and increment a retry counter. In response to the retry counter reaching a threshold, the measuring device 102 and the reflector device 104 change the frequency to the next frequency in the pattern and begin transmitting and receiving packets at the new frequency. The wireless ranging system 100 thus prevents a system "lock" wherein the system continuously attempts to communicate in one frequency for the entire data collection stage, thereby increasing the likelihood of a successful ranging measurement.

The interference tolerance parameters can be established in one or more of a variety of ways. In at least one embodiment, the interference tolerance parameters are stored at the measuring device 102 during manufacture or testing of the device, and reflect tolerance values that are expected to result in a successful measurement under normal conditions. In some embodiments, the measuring device 102 can adjust the interference tolerance parameters based on one or more factors, such as based on detected environmental conditions (e.g., a measured signal-to-noise ratio of a test signal received from the reflector device 104), in response to a threshold number of unsuccessful ranging measurements, based on user input, and the like, or a combination thereof.

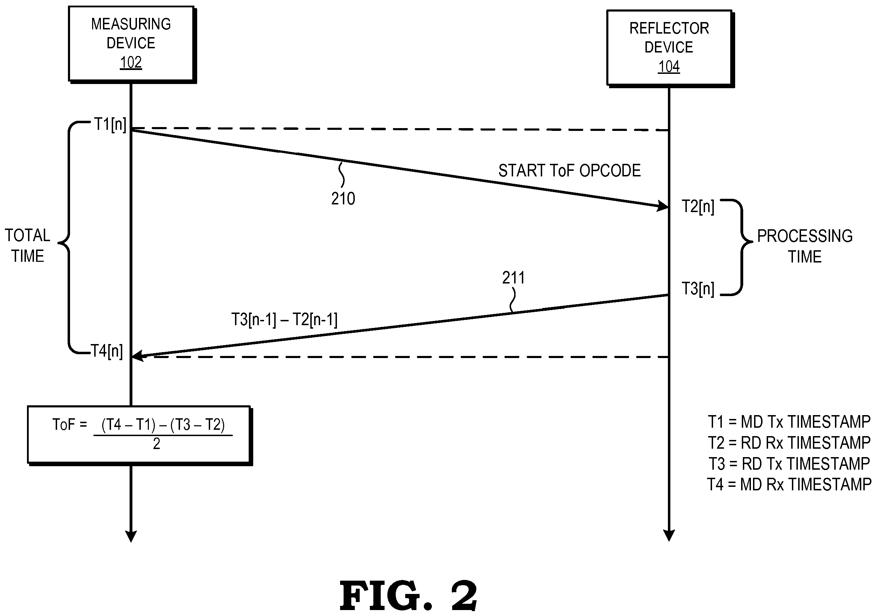

FIG. 2 illustrates a portion of a data collection stage of the multi-stage ranging protocol implemented by the wireless ranging system 100 of FIG. 1 in accordance with at least one embodiment. The depicted example illustrates the transmission of an Nth ranging packet 210 and the resulting transmission of an Nth response packet 211, where N is an integer. The measuring device records a count, designated T1[n], in response to initiating transmission of the ranging packet 210. In response to receiving the ranging packet 210, the reflector device 104 records a count designated T2[n] and generates the response packet 211. As illustrated, generating the response packet 211 takes an amount of time designated as "processing time" that is to be eliminated in order to get an accurate reading of the distance between the measuring device 102 and the reflector device 104. The processing time for the Nth response packet can be expressed by the following formula:

$$T3[n] - T2[n]$$

In response to initiating transmission of the response packet 211 the reflector device 104 stores a count designated T3[n]. In the example of FIG. 2, the reflector device 104 generates the response packet 211 to include a data payload indicating the processing time for the previous response packet (i.e., the n-1 response packet). By including the processing time for the n-1 response packet in the nth response packet, rather than the processing time for the nth packet, the reflector device 104 can more quickly generate response packets, thereby improving overall ranging efficiency.

In response to receiving the response packet 211, the measuring device 102 records a count designated T4[n]. During the processing stage, the measuring device 102 can generate the ToF value for each ranging-response packet pair according to the following formula:

$$ToF = \frac{(T4 - T1) - (T3 - T2)}{2}$$

As described further herein, in some cases at least one of the ranging packet 210 or the response packet 211 can fail to successfully propagate to the target device because of, for example, interference in the medium over which the packets are transmitted (e.g., electromagnetic interference in the air). Each of the measuring device 102 and the reflector device 104 can employ the interference tolerance parameters to establish limits on one or more of 1) the amount of time to wait for a given packet; and 2) the amount of time allowed for the data collection stage. In response to one or more of the limits being exceeded, the measuring device 102 and the reflector device 104 can take remedial action, such as one or more of retransmitting a given packet, changing a communication frequency to the next frequency in a frequency pattern, terminating the data collection stage, and the like.

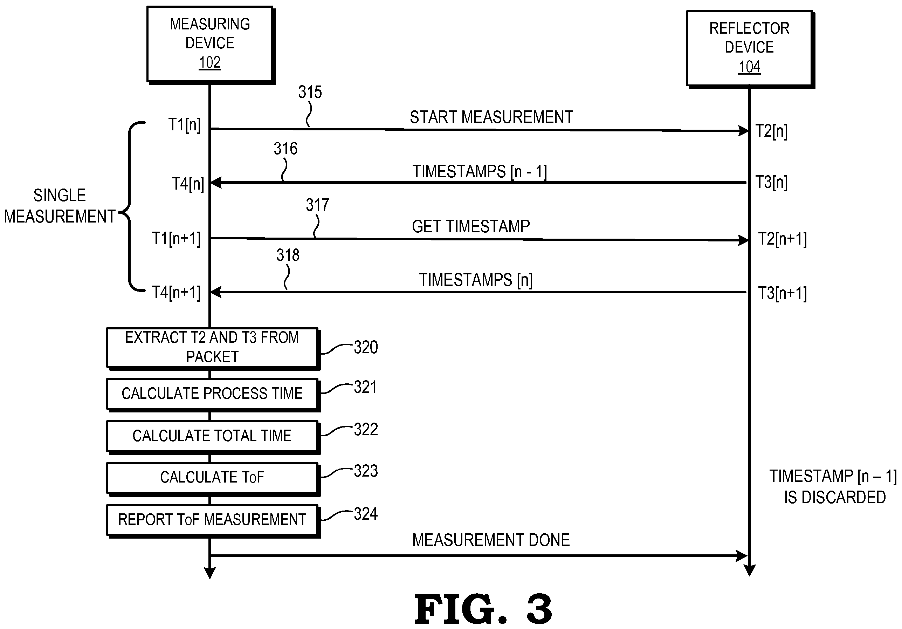

FIG. 3 illustrates another example of a portion of a data collection stage and processing stage of the multi-stage ranging protocol implemented by the wireless ranging system 100 of FIG. 1 in accordance with at least one embodiment. In the depicted example, the measuring device 102 initiates the Nth ToF measurement by transmitting a ranging packet 315 and storing a corresponding count T1[n]. In response to receiving the ranging packet 315 the reflector device 104 stores a count T2[n] and generates a response packet 316 including the timestamps (counts) T2[n-1] and T3[n-1] for the previous (n-1) ranging packet and response packet. The reflector device 104 transmits the response packet 316 and stores a corresponding count T3[n]. In response to receiving the response packet 316 the measuring device 102 stores a count T4[n].

Subsequently, the measuring device 102 initiates the N+1 ToF measurement by transmitting a ranging packet 317 and storing a corresponding count T1[n+1]. In response to receiving the ranging packet 317 the reflector device 104 stores a count T2[n+1] and generates a response packet 318 including the timestamps (counts) T2[n] and T3[n-1] for the previous ranging packet 315 and response packet 316. The reflector device 104 transmits the response packet 318 and stores a corresponding count T3[n+1]. In response to receiving the response packet 318, the measuring device 102 stores a count T4[n+1].

In addition, the measuring device 102 extracts T2[n] and T3[n] at block 320. At block 321 the measuring device 102 calculates the process time for generating the response packet 316 by subtracting T2[n] from T3[n]. At block 322 the measuring device 102 calculates the total time between transmission of the ranging packet 315 and receipt of the responsive packet 316 by subtracting T1[n] from T4[n]. At block 323 the measuring device 102 calculates the Nth ToF value according to the formula set forth above. At block 324 the measuring device 102 reports the Nth ToF value by, for example, storing the value at a memory for subsequent processing. The measuring device 102 then signals the reflector device 104 that it can discard the n-1 timestamps (counts), allowing the reflector device 104 to conserve memory resources.

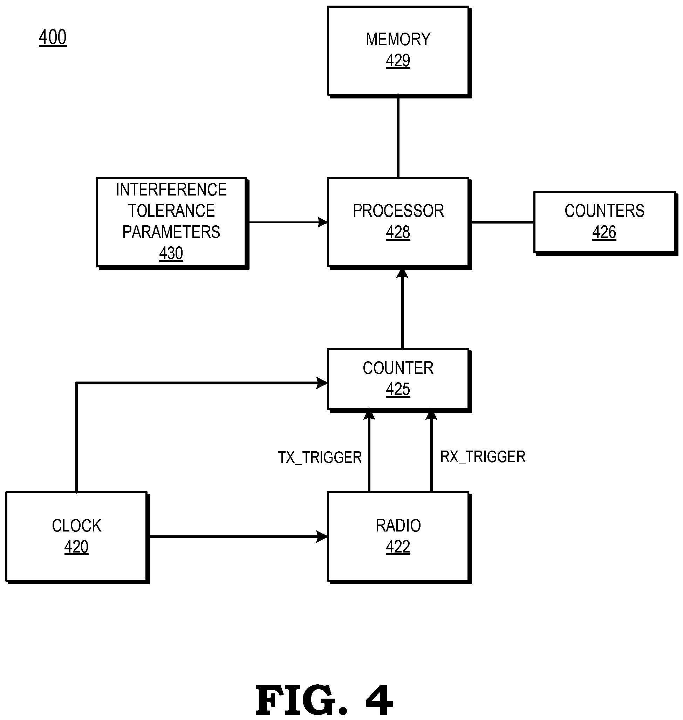

FIG. 4 is a block diagram of a wireless radio module 400 in accordance with at least one embodiment. For purposes of description, it is assumed that the wireless radio module 400 corresponds to the radio module 105 of FIG. 1. However, it will be appreciated that the radio module 106 of FIG. 1 can employ a similar configuration as the illustrated radio module 400.

In the depicted example, the radio module 400 includes a clock 420, a radio 422, a counter 425, additional counters 426, a processor 428, and a memory 429. The clock 420 is generally configured to provide clock signals to synchronize operations of the radio 422 and the counter 425 In at least one embodiment, the clock 420 is an adjustable clock source, whereby a control module (not shown) can change the frequency of the clock signal provided by the clock 420. The clock 420 can thus be adjusted to synchronize with the clock of another radio, such as the radio module 106 of the reflector device 104. Further, the clock 420 can be adjusted to support frequency hopping during a timestamp data collection stage as described further herein.

The radio 422 is a wireless radio generally configured to provide at least a physical (PHY) and link layers for wireless communication according to one or more wireless protocols such as BLE, IEEE 802.15.4, and GFSK protocols. The radio 422 is further configured to provide control signaling to the counter 425 in response to transmitting a ranging packet or receiving a response packet in order to initiate storage of a corresponding timestamp (count). In the depicted example, the control signaling includes two signals, designated TX_TRIGGER and RX_TRIGGER, each of which has a relatively fixed relationship with a defined transmit or receive event at the radio 422. For example, in at least one embodiment the radio 422 is configured to assert the TX_TRIGGER signal in response to transmitting the first bit of a packet, and to assert the RX_TRIGGER signal in response to matching a packet address of a received packet to an address associated with the radio 422. As described further below, by asserting the TX_TRIGGER and RX_TRIGGER signals based on defined events, the radio 422 supports relatively precise timestamps for transmitted and received packets.

The counter 425 is a free running counter generally configured to adjust a stored count in response to the clock signal provided by the clock 420. The counter 425 is configured to initialize the stored count to an initial value, to adjust the stored count based on the clock signal, and in response to the stored count reaching an overflow value reset the stored count to the initial value. In addition, the counter 425 is configured to provide a count to the processor 428 in response to the control signaling from the radio 422, such as in response to assertion of the TX_TRIGGER signal or assertion of the RX_TRIGGER signal. In the illustrated embodiment, the counter 425 is configured to provide a count designated TX_TS in response to assertion of the TX_TRIGGER signal, and to provide a count designated RX_TS in response to assertion of the RX_TRIGGER signal. As noted above, the TX_TRIGGER and RX_TRIGGER have relatively fixed relationships to defined transmit and receive events, respectively, at the radio 422. Accordingly, the TX_TS and RX_TS counts generated by the counter 425 are relatively precise timestamps for the corresponding transmit and receive events.

In addition, in the illustrated embodiment the counter 425 provides a rollover signal (designated ROLLOVER in the Figure) to the processor 428 that is asserted in response to the counter 425 rolling over (i.e., reaching a specified rollover value and returning to an initial state). In at least one embodiment the processor 428 keeps a count of the rollovers at the counter 425 and employs the rollover count to extract timestamps from the raw counts provided by the counter 425. For example, in at least one embodiment the processor 428 can extract a timestamp by multiplying the number of rollovers with a timing factor corresponding to a known amount of time that corresponds to a rollover of the counter 425 and adding the product of the multiplication to the raw count provided by the counter 425.

The memory 429 includes one or more memory modules generally configured to store data on behalf of the processor 428. Accordingly, the memory 429 can be volatile memory such as random-access memory (RAM), non-volatile memory such as flash memory, or a combination thereof. The processor 428 is a processing device (such as a general purpose or application specific processor configured to implement one or more portions of the multi-stage ranging protocol described herein. For example, in at least one embodiment the processor 428 is configured to work with the memory 429 to collect timestamp data during a data collection stage of the multi-stage ranging protocol.

To illustrate, in operation the processor 428 initiates the data collection stage by providing a signal (not shown) to the radio 422. In response, the radio 422 forms and transmits a threshold number of ranging packets and receives a corresponding number of response packets as described above. In response to transmitting a ranging packet the radio 422 provides a control signal to the counter 425. In response, the counter 425 provides a count to the processor 428, which stores the count at the memory 429 as, for example, the T1[n] timestamp. Similarly, in response to receiving a response packet the radio 422 provides a control signal to the counter 425. In response, the counter 425 provides a count to the processor 428, which stores the count at the memory 429 as, for example, the T4[n] timestamp. Thus, the processor 428 collects and stores the timestamps for the ranging packets and the response packets during the data collection stage. In addition, in at least one embodiment the processor 428 performs one or more functions of the processing and reporting stages described herein.

In addition, the processor 428 employs interference tolerance parameters 430 and counters 426 to establish limits on one or more portions of the data collection stage. The interference tolerance parameters 430 can be stored in a non-volatile memory (not shown) of the radio module 400, can be received from or transmitted to another device (e.g., the reflector device 104), and the like or a combination thereof. As noted above, the interference tolerance parameters can delineate one or more of: 1) a total number of expected samples per wireless ranging session; 2) a number of samples to be exchanged for each frequency in the frequency pattern; 3) a maximum number of packet transmission retries at each frequency in the frequency pattern; and 4) a maximum duration of the wireless ranging session. Based on the interference tolerance parameters the processor 428 can establish one or more timeout values, such as a retry timeout value to establish an amount of time before retrying transmission of a ranging (or response) packet, an FCT timeout value to establish a total amount of time for the data collection stage, and the like.

The processor 428 employs the counters 426 to determine whether a timeout period, as indicated by the timeout values, has expired. For example, in at least one embodiment, the processor stores each timeout value as an initial value at a corresponding counter of the counters 426. During the data collection stage, the counters count down from the initial value based on, for example, edges of the clock 420 (or another clock). In response to a counter of the counters 426 reaching a threshold value (e.g., zero), the counter indicates to the processor 428 that the corresponding timeout period has expired. In response to the indication, the processor 428 can take remedial action. For example, in response to the retry timeout counter reaching the indicated threshold, the processor 428 can retry transmitting the most recent ranging (or response) packet. Further, in response to specified events, the processor 428 can reset the corresponding counter. For example, in response to receiving a response packet, the processor 428 can reset the retry timeout counter to its initial value. The processor 428 thereby monitors the timeout periods mandated by the interference tolerance parameters 430 and takes remedial action in response to expiration of a timeout period.

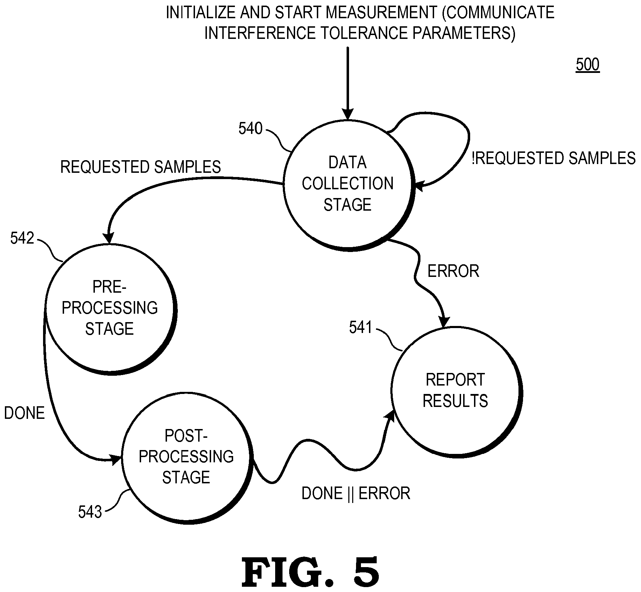

FIG. 5 illustrates a state diagram 500 depicting the different stages of the multi-stage ranging protocol implemented at the wireless ranging system 100 of FIG. 1 in accordance with at least one embodiment. In the illustrated example, in response to initiating a distance measurement, the wireless ranging system 100 enters a state 540 corresponding to the data collection stage. As part of the initialization, the measuring device 102 communicates the interference tolerance parameters to the reflector device 104. During the data collection stage (that is, while in state 540), the measuring device 102 sends ranging packets, receives corresponding response packets, and collects and stores timestamps (counts) for the ranging packets and response packets as described above until a threshold number of requested samples has been reached, wherein each sample corresponds to a set of ranging and receive packet timestamps. Thus, using the example described above, in at least one embodiment one sample corresponds to the T1[n], T2[n], T3[n], and T4[n] timestamps. In response to an error in collecting the threshold number of samples, including in response to detecting a specified timeout condition indicated by the interference tolerance parameters, the wireless ranging system 100 transitions directly to a state 541, corresponding to the reporting stage, and reports the error.

In response to the threshold number of samples being collected during the data collection stage, the state of the wireless ranging system 100 transitions to a state 542, corresponding to the pre-processing stage of the multi-stage protocol. In at least one embodiment, the pre-processing stage the measuring device 102 performs pre-processing operations based on the timestamp data collected during the data collection stage. Examples of pre-processing operations include extraction of timestamp information from the stored raw count values, calculation of processing time and total time values for each set of timestamps, compensation of the timestamp values based on identified offsets such as AGC group delay offsets and offsets resulting from artifacts, and calculation of a ToF value for each set of timestamps. In response to completion of the pre-processing stage, the wireless ranging system transitions to a state 543, corresponding to the post processing stage.

During the post-processing stage of state 543, the measuring device 102 performs post-processing operations based on the timestamp data collected during the data collection stage. Examples of post-processing operations include extracting data statistics from the set of ToF values calculated during the pre-processing stage, computing quality metrics for each ToF value, pruning of the ToF values based on the quality metrics, and calculation of an effective ToF value based on the ToF values.

In response to calculating the effective ToF value, or in response to an error, the wireless ranging system 100 transitions from the state 543 to the state 541 corresponding to the reporting stage. During the reporting stage, if an error was detected during the state 540 or the state 543, the wireless ranging system reports the error, such as by recording the error in an error log for subsequent access by a user or analysis tool. If no error was detected, during the reporting stage the measuring device 102 adjusts the effective ToF value based on any calibration offset identified during the initial calibration process, and then determines the distance between the measuring device 102 and the reflector device 104 based on the adjusted ToF value. The measuring device 102 then reports the distance, such as by providing the distance to software executing at the measuring device 102. The executing software can execute one or more specified actions based on the reported distance, such as unlocking a car door, identifying the location of a tracked asset, and the like.

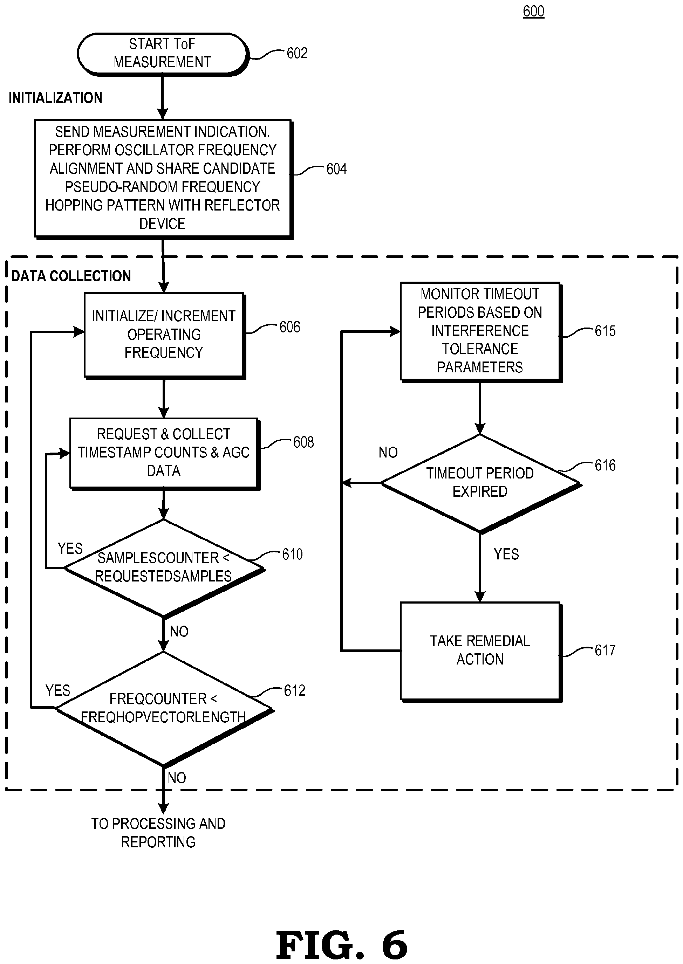

FIG. 6 illustrates a flow diagram of a method 600 of implementing a multi-stage wireless ranging protocol in accordance with at least one embodiment. For purposes of description, FIG. 6 is described with respect to an example implementation at the wireless ranging system 100 of FIG. 1. At block 602 a ToF measurement session is initiated based on a start condition such as a user request, expiration of a timer triggering a periodic measurement session, detection of a specified device state, and the like.

In response to initiation of the ToF measurement session, an initialization stage takes place at block 604. During the initialization stage, the measuring device 102 sends a packet to the reflector device 104 to indicate that a measurement session has been initiated. In addition, the measuring device 102 and the reflector device 104 share timing information to align the oscillators or clock signals for their respective radios and counters. Further, the measuring device 102 provides a pseudo-random frequency pattern to the reflector device 104, indicating the pattern of frequencies to be used during the data collection stage.

The method flow proceeds to the data collection stage at block 606, and the radio modules 105 and 106 are initialized to an initial frequency indicated by the frequency pattern shared at block 604. At block 608, the measuring device 102 and the reflector device 104 communicate ranging and response packets to share timestamp counts as described above with respect to, for example, FIGs. 2 and 3. In at least one embodiment, the measuring device 102 and the reflector device 104 also share automatic gain control information for their respective radio modules 105 and 106. At block 610, the measuring device 102 determines if a requested number of count samples have been collected. If not, the method returns to block 608. If the requested number of samples have been collected, the method flow moves to block 612 and the measuring device 102 determines if all the frequencies in the frequency pattern have been used. If not, the method flow returns to block 606 and the radio modules 105 and 106 are set to the next frequency indicated in the frequency pattern to collect the next set of count samples. Once all the frequencies in the frequency pattern have been used, the method flow proceeds from block 612 to block 614 and the pre-processing stage begins.

In addition, during the data collection stage and concurrently with the operations described above, at block 615 the measuring device 102 monitors one or more timeout conditions based on the interference tolerance parameters. At block 616 the measuring device 102 determines if a timeout condition has expired. If not, the method flow returns to block 615 and the measuring device 102 continues monitoring. In response to expiration of a timeout period, the method flow proceeds to block 617 and the measuring device 102 takes remedial action, such as changing a transmission frequency for the transmitted packets, exiting the data collection stage, and the like.

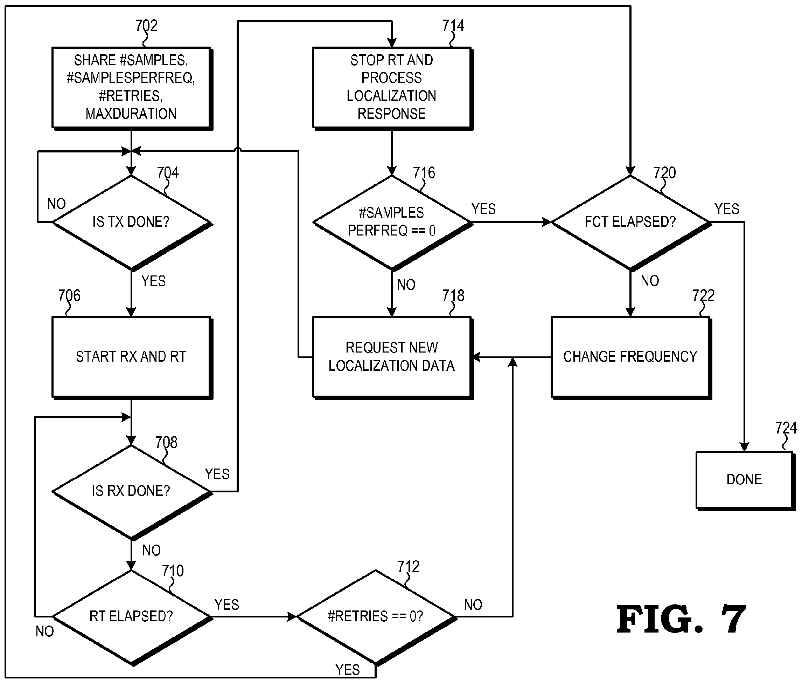

FIG. 7 is a flow diagram of a method 700 of monitoring timeout conditions during the data collection stage in accordance with at least one embodiment. For purposes of description, the method 700 is described with respect to an example implementation at the wireless ranging system 100 of FIG. 1. At block 702, the measuring device 102 exchanges interference tolerance parameters with the reflector device 104. The interference tolerance parameters include 1) a total number of expected samples per wireless ranging session; 2) a number of samples to be exchanged for each frequency in the frequency pattern; 3) a maximum number of packet transmission retries at each frequency in the frequency pattern; and 4) a maximum duration of the wireless ranging session. Based on these parameters, the measuring device 102 generates a retry timeout (RT) value and a failed communication timeout (FCT) value.

At block 704 the measuring device 102 initiates transmission of a ranging packet and determines whether transmission of the packet is complete. In response to completing transmission of the ranging packet, the method flow moves to block 706 and the measuring device 102 initiates a retry timer at one of the counters 426. At block 708 the measuring device 102 determines if a response packet has been received. If so, the method flow moves to block 714, described below. If a response packet has not been received, the method flow moves to block 710 and the measuring device 102 determines if the retry count has reached a threshold value (e.g. the RT value), indicating that a retry timeout has occurred. If not, the method flow returns to block 708 and the measuring device 102 continues to await reception of a response packet until either the packet is received or a retry timeout has occurred.

Returning to block 710, in response to a retry timeout the method flow moves to block 712 and the measuring device 102 determines if a retry counter (indicating the number of retries, and initialized to the number of packet transmission retries identified at block 702) has reached zero (indicating the maximum number of retries has been attempted). If so, the method flow moves to block 720, described below. If not, the method flow moves to block 718 and the measuring device initiates transmission of another ranging packet. The method flow then returns to block 704.

Returning to block 708, in response to receiving a response packet, the method flow moves to block 714 and the measuring device 102 stops the retry timeout counter and processes the response packet to generate a ToF sample as described above. The method flow moves to block 716 and the measuring device 102 determines if the counter for the number of samples per frequency, as determined at block 702, has reached zero. If not, the measuring device 102 decrements the counter and the method flow moves to block 718 where the measuring device 102 initiates transmission of another ranging packet to generate another ToF sample.

Returning to block 716, if the counter for the number of samples per frequency has reached zero, the method flow moves to block 720 and the measuring device 102 determines if the FCT counter, as initialized at block 702, has reached zero. If not, the method flow moves to block 722 and the measuring device 102 changes the frequency of transmission used to transmit ranging packets to the next frequency in the frequency pattern. In addition, the measuring device 102 re-initializes the counter for the number of samples per frequency to the initial value determined at block 702. The method flow moves to block 718 where the measuring device 102 initiates transmission of another ranging packet (at the new frequency) to generate another ToF sample.

Returning to block 720, in response to determining that the FCT counter has reached zero, the measuring device 102 determines that a data collection stage timeout has occurred. In response, the method flow moves to block 724 and the measuring device 102 takes remedial action, such as reporting an error, exiting the data collection stage and attempting to calculate a distance based on the samples received so far, and the like.

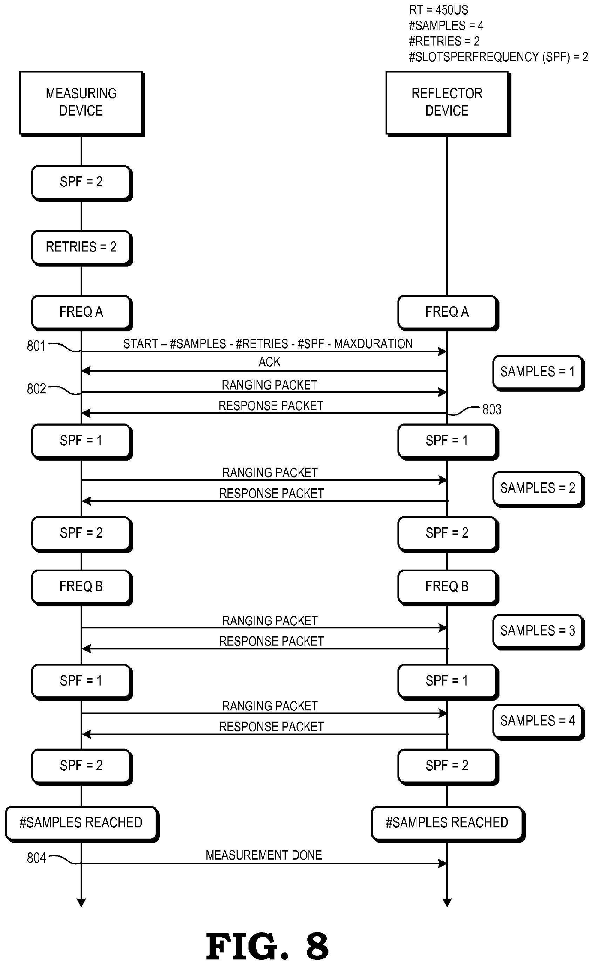

FIGs. 8-11 illustrate examples of the wireless ranging system 100 employing interference tolerance parameters, and corresponding timeout values based on such parameters, to govern the data collection stage in accordance with some embodiments. Each of the FIGs. 8-11 depict a series of events, with time progressing vertically from top to bottom. The arrow on the left of each figure represents events and values at the measuring device 102 and the arrow on the right represents values and events at the reflector device 104. The lines between the left and right arrows represent communications, or attempted communications, between the measuring device 102 and the reflector device 104, with an incomplete line (that is, a line that does not reach both the left and right arrows) representing a failed communication of a packet or other data.

Turning to the individual Figures, FIG. 8 represents an example operation where all packets are successfully communicated between the measuring device 102 and the reflector device 104. In the depicted example, the interference tolerance parameters represent a retry timeout of 450 microseconds, a number of samples per frequency value of 4, a number of retries per packet of 2, and a number of slots per frequency (SPF) of 2. At time 801, the measuring device 102 communicates the interference tolerance parameters to the reflector device 104, and each of the measuring device 102 and reflector device 104 initializes counters to reflect each of the values represented by the interference tolerance parameters.

At time 802, the measuring device 102 transmits the first ranging packet of the data collection stage to the reflector device 104. In response, at time 803, the reflector device 104 transmits a response packet to the measuring device 102. As the transmission of the ranging and response packets are both successful, a first ToF sample is created and the sample count is incremented. In the depicted example, the measuring device 102 and reflector device 104 continue to successfully transmit ranging and response packets, respectively, proceeding through the frequency pattern, until 4 ToF samples have been created by the measuring device 104, thereby ending the data collection stage at time 804.

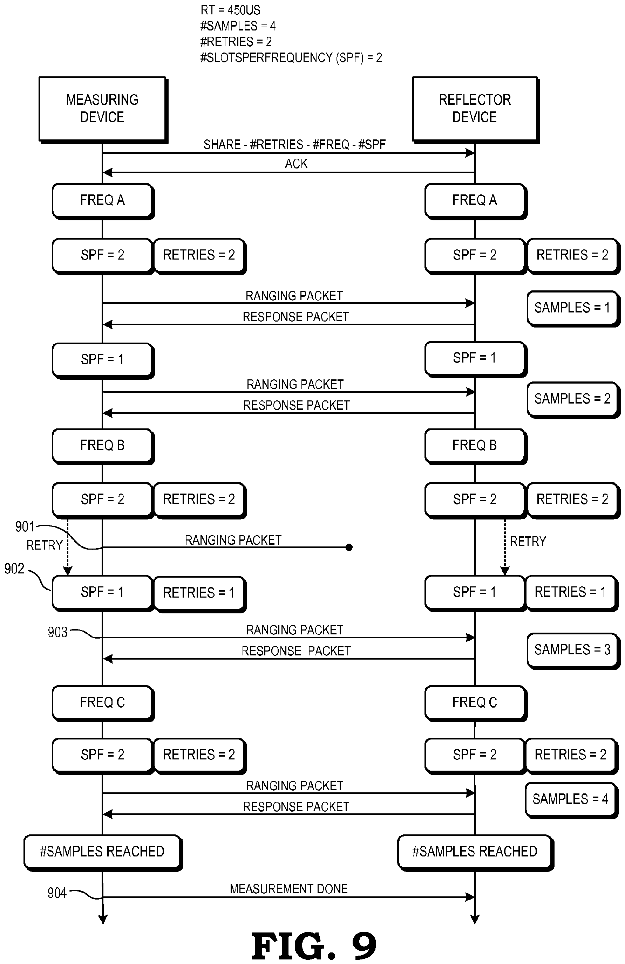

FIG. 9 illustrates an example of the measuring device 102 retrying transmission of a ranging packet based on the retry timeout (RT) value in accordance with at least one embodiment. The depicted example is similar to the example of FIG. 8 and employs the same interference tolerance parameters. However, at time 901 the measuring device 102 transmits a ranging packet that, due to interference, is not successfully received at the reflector device 104. Accordingly, the reflector device 104 does not send a response packet, resulting in a retry timeout, and corresponding adjustment of the SPF and retry counters at time 902. At time 903, in response to the retry timeout, the measuring device 104 retransmits the ranging packet, which is received successfully at the reflector device 104. The measuring device 102 and reflector device 104 continue to successfully transmit ranging and response packets, respectively, proceeding through the frequency pattern, until 4 ToF samples have been created by the measuring device 104, thereby ending the data collection stage at time 904.

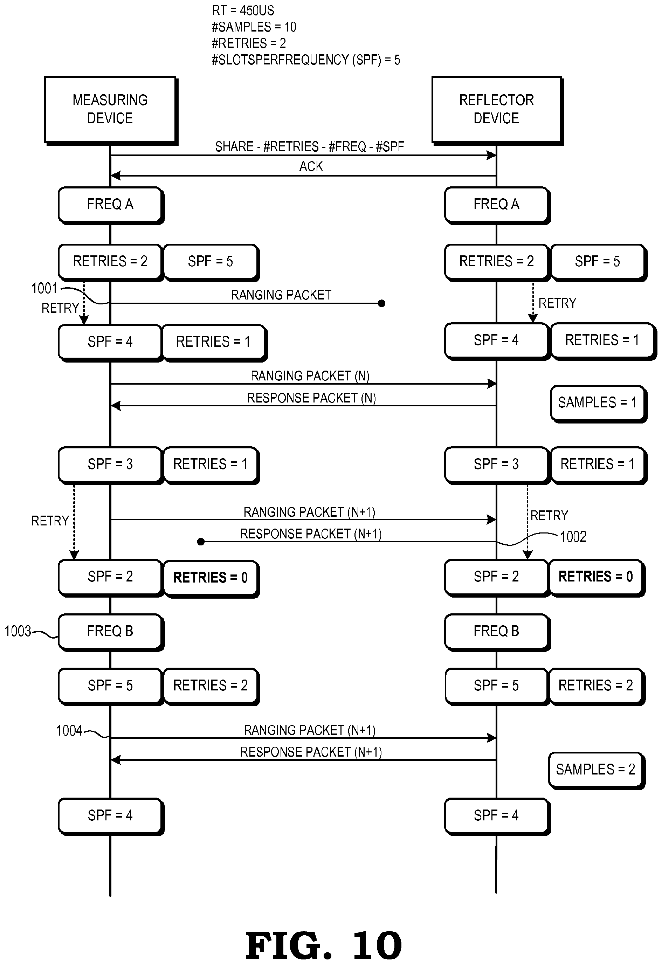

FIG. 10 illustrates an example of the measuring device 102 and the reflector device 104 retrying transmission of a packets until the retries counter expires (reaches zero) in accordance with at least one embodiment. The depicted example is similar to the example of FIG. 8 and employs the same interference tolerance parameters. However, at time 1001 the measuring device 102 transmits a ranging packet that, due to interference, is not successfully received at the reflector device 104. Accordingly, the reflector device 104 does not send a response packet, resulting in a retry timeout, and corresponding adjustment of the SPF and retry counters. In response to the retry timeout, the measuring device 104 retransmits the ranging packet, which is received successfully at the reflector device 104.

At subsequent time 1002 the ranging device 104 sends a response packet that is not successfully received at the measuring device 102, resulting in a retry timeout and corresponding adjustment of the SPF and retry counters and, in particular, in the retries counter reaching zero. In response to the retries counter reaching zero, both the measuring device and the reflector device change the transmission frequency to the next frequency in the frequency pattern (designated Frequency B). The measuring device 102 and reflector device 104 begin transmitting packets with the next frequency at 1004.

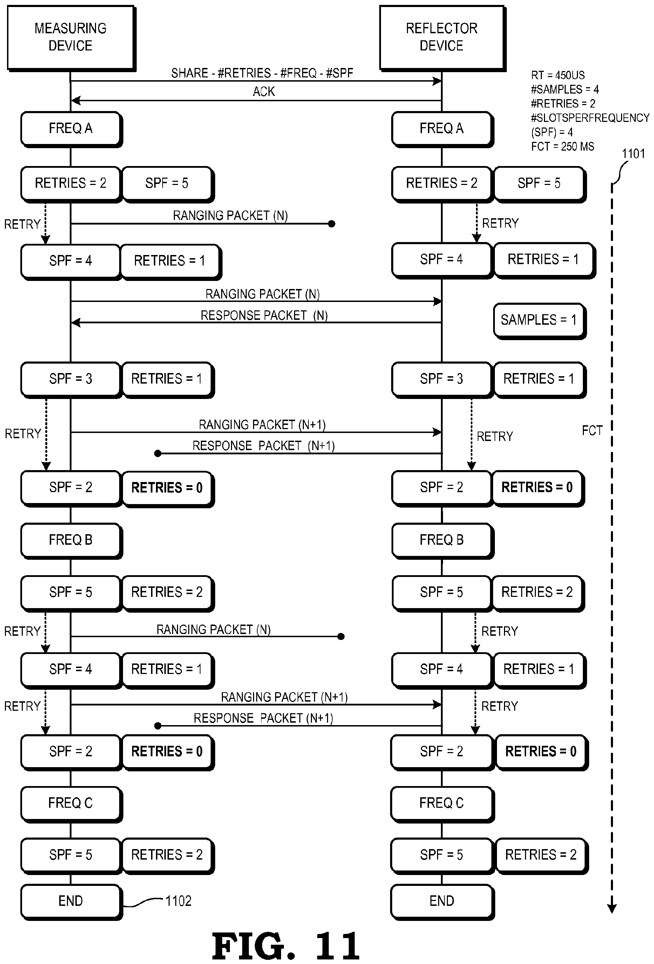

FIG. 11 illustrates an example of the measuring device 102 and the reflector device 104 retrying transmission of a packets until the FCT counter expires (reaches zero) in accordance with at least one embodiment. The depicted example is similar to the example of FIG. 8 and employs the same interference tolerance parameters. However, FIG. 11 also illustrates a line 1101, representing the periodic countdown of the FCT counter concurrently with the transmission of packets at the measuring device 102 and the reflector device 104. In the illustrated example, the transmission interference is such that the measuring device 102 and the reflector device 104 each fail to successfully transmit packets. Further, the failure in packet transmission results in the FCT counter reaching zero, at time 1102, before four ToF samples have been computed at the measuring device 102. Thus, at time 1102 the measuring device 102 terminates the data collection stage without reaching the specified number of ToF samples.

In some embodiments, certain aspects of the techniques described above may implemented by one or more processors of a processing system executing software. The software comprises one or more sets of executable instructions stored or otherwise tangibly embodied on a non-transitory computer readable storage medium. The software can include the instructions and certain data that, when executed by the one or more processors, manipulate the one or more processors to perform one or more aspects of the techniques described above. The non-transitory computer readable storage medium can include, for example, a magnetic or optical disk storage device, solid state storage devices such as Flash memory, a cache, random access memory (RAM) or other non-volatile memory device or devices, and the like. The executable instructions stored on the non-transitory computer readable storage medium may be in source code, assembly language code, object code, or other instruction format that is interpreted or otherwise executable by one or more processors.

A computer readable storage medium may include any storage medium, or combination of storage media, accessible by a computer system during use to provide instructions and/or data to the computer system. Such storage media can include, but is not limited to, optical media (e.g., compact disc (CD), digital versatile disc (DVD), Blu-Ray disc), magnetic media (e.g., floppy disc , magnetic tape, or magnetic hard drive), volatile memory (e.g., random access memory (RAM) or cache), non-volatile memory (e.g., read-only memory (ROM) or Flash memory), or microelectromechanical systems (MEMS)-based storage media. The computer readable storage medium may be embedded in the computing system (e.g., system RAM or ROM), fixedly attached to the computing system (e.g., a magnetic hard drive), removably attached to the computing system (e.g., an optical disc or Universal Serial Bus (USB)-based Flash memory), or coupled to the computer system via a wired or wireless network (e.g., network accessible storage (NAS)).

A wireless ranging system employs interference tolerance parameters in to reduce the effects of wireless interference on device performance (e.g. power consumption). As part of a wireless ranging session, each device identifies one or more wireless ranging parameters that indicate one or more limits (e.g. time limits, sample limits, and the like) corresponding to different portions of the ranging session. In response to a limit indicated by the interference tolerance parameters being reached prior to completion of the wireless ranging session, the wireless ranging system can take remedial action.

In other embodiments certain aspects of the techniques described above may implemented by one or more of field programmable gate arrays (FPGAs), dedicated localization HW accelerators in system-on-chips (SoCs), Digital signal processors (DSP), and the like.

Note that not all of the activities or elements described above in the general description are required, that a portion of a specific activity or device may not be required, and that one or more further activities may be performed, or elements included, in addition to those described. Still further, the order in which activities are listed are not necessarily the order in which they are performed. Also, the concepts have been described with reference to specific embodiments. However, one of ordinary skill in the art appreciates that various modifications and changes can be made.

Accordingly, the specification and figures are to be regarded in an illustrative rather than a restrictive sense.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims. Moreover, the particular embodiments disclosed above are illustrative only, as the disclosed subject matter may be modified and practiced in different but equivalent manners apparent to those skilled in the art having the benefit of the teachings herein. No limitations are intended to the details of construction or design herein shown, other than as described in the claims below. It is therefore evident that the particular embodiments disclosed above may be altered or modified.

Accordingly, the protection sought herein is as set forth in the claims below.

## Claims

1. A wireless ranging method comprising:

   identifying a first interference tolerance parameter for distance estimation at a first device (102);
   defining a first timeout condition based on the first interference tolerance parameter;
   for a first distance estimation session:

   initiating transmission and receipt of a plurality of packets to generate a plurality of time-of-flight values;
   in response to determining that the first timeout condition has expired, exiting the first distance estimation session without completing transmission and reception of the plurality of packets; and
   in response to completing the first distance estimation session:

   generating an effective time-of-flight value based on a combination of the plurality of the time-of-flight values; and
   identifying a distance between the first device (102) and a second device (104) based on the effective time-of-flight value.

2. The method of claim 1, wherein the first interference tolerance parameter comprises a number of total samples, each sample indicating one of a transmit time and a receive time of a corresponding packet of the plurality of packets.

3. The method of claim 1 or 2, wherein the first interference tolerance parameter comprises a number of samples associated with a first frequency, each sample indicating one of a transmit time and a receive time of a corresponding packet of the plurality of packets.

4. The method of claim 3, further comprising:
   for the first distance estimation session, changing a frequency of transmission from the first frequency to a second frequency in response to transmitting the number of samples associated with the first frequency.

5. The method of any preceding claim, wherein the first interference tolerance parameter comprises a number of sample retries, each sample indicating one of a transmit time and a receive time of a corresponding packet of the plurality of packets.

6. The method of any preceding claim, wherein the first interference tolerance parameter comprises a total duration associated with the first distance estimation session.

7. The method of any preceding claim, wherein the first interference tolerance parameter comprises a per-sample duration associated with each sample of the first distance estimation session, each sample indicating one of a transmit time and a receive time of a corresponding packet of the plurality of packets.

8. The method of any preceding claim, further comprising:

    identifying a second interference tolerance parameter for distance estimation at the first device (102); and
    for the first distance estimation session:
    in response to determining a second timeout condition based on the second interference tolerance parameter, exiting the first distance estimation session without completing transmission and reception of the plurality of packets.

9. The method of any preceding claim, wherein identifying the first interference tolerance parameter comprises receiving the first interference tolerance parameter from the second device to initiate the first distance estimation session.

10. A wireless ranging device, comprising:

    a radio (422) configured to transmit and receive a plurality of packets;
    a counter (425) configured to generate a first plurality of counts, each of the first plurality of counts indicative of a transmit time of a corresponding packet;
    the counter (425) further configured to generate a second plurality of counts, each of the second plurality of counts indicative of a receive time of a corresponding packet;
    a processor (428) configured to:

        identify a first interference tolerance parameter (430) for distance estimation at a first device (102);
        define a first timeout condition based on the first interference tolerance parameter;
        for a first distance estimation session:

            initiate transmission and receipt of a plurality of packets to generate a plurality of time-of-flight values;
in response to determining that the first timeout condition has expired, exit the first distance estimation session without completing transmission and reception of the plurality of packets; and
in response to completing the first distance estimation session:

        generate an effective time-of-flight value based on a combination of the first plurality of the time-of-flight values; and
        identify a distance between the first device (102) and a second device (104) based on the effective time-of-flight value.

11. The device of claim 10, wherein the first interference tolerance parameter comprises a number of total samples, each sample indicating one of a transmit time and a receive time of a corresponding packet of the plurality of packets.

12. The device of claim 10 or 11, wherein the first interference tolerance parameter comprises a number of samples associated with a first frequency, each sample indicating one of a transmit time and a receive time of a corresponding packet of the plurality of packets.

13. The device of claim 12, wherein the processor is configured to:
for the first distance estimation session, change a frequency of transmission from the first frequency to a second frequency in response to transmitting the number of samples associated with the first frequency.

14. The device of any of claims 10 to 13, wherein the first interference tolerance parameter comprises a number of sample retries, each sample indicating one of a transmit time and a receive time of a corresponding packet of the plurality of packets.

15. The device of any of claims 10 to 14, wherein the first interference tolerance parameter comprises a total duration associated with the first distance estimation session.

**Patentansprüche**

1. Verfahren zur drahtlosen Entfernungsmessung, umfassend:

    Identifizieren eines ersten Interferenztoleranzparameters zur Abstandsschätzung an einer ersten Vorrichtung (102);
Definieren einer ersten Zeitüberschreitungsbedingung basierend auf dem ersten Interferenztoleranzparameter;
für eine erste Abstandsschätzungssitzung:

Initiieren des Sendens und Empfangens einer Mehrzahl von Paketen, um eine Mehrzahl von Flugzeitwerten zu generieren;
in Reaktion auf das Bestimmen, dass die erste Zeitüberschreitungsbedingung abgelaufen ist, Beenden der ersten Abstandsschätzungssitzung, ohne das Senden und Empfangen der Mehrzahl von Paketen abzuschließen; und
in Reaktion auf das Abschließen der ersten Abstandsschätzungssitzung:

Generieren eines effektiven Flugzeitwerts basierend auf einer Kombination der Mehrzahl von Flugzeitwerten; und
Identifizieren eines Abstands zwischen der ersten Vorrichtung (102) und einer zweiten Vorrichtung (104) basierend auf dem effektiven Flugzeitwert.

2. Verfahren nach Anspruch 1, wobei der erste Interferenztoleranzparameter eine Anzahl von Gesamtproben umfasst, wobei jede Probe eine von einer Sendezeit und einer Empfangszeit eines entsprechenden Pakets der Mehrzahl von Paketen angibt.

3. Verfahren nach Anspruch 1 oder 2, wobei der erste Interferenztoleranzparameter eine Anzahl von Gesamtproben umfasst, die mit einer ersten Frequenz assoziiert ist, wobei jede Probe eine von einer Sendezeit und einer Empfangszeit eines entsprechenden Pakets der Mehrzahl von Paketen angibt.

4. Verfahren nach Anspruch 3, ferner umfassend:
Ändern einer Sendefrequenz von der ersten Frequenz auf eine zweite Frequenz für die erste Abstandsschätzungssitzung in Reaktion auf das Senden der Anzahl von Proben, die mit der ersten Frequenz assoziiert ist.

5. Verfahren nach einem der vorhergehenden Ansprüche, wobei der erste Interferenztoleranzparameter eine Anzahl von Probenwiederholungen umfasst, wobei jede Probe eine von einer Sendezeit und einer Empfangszeit eines entsprechenden Pakets der Mehrzahl von Paketen angibt.

6. Verfahren nach einem der vorhergehenden Ansprüche, wobei der erste Interferenztoleranzparameter eine Gesamtdauer umfasst, die mit der ersten Abstandsschätzungssitzung assoziiert ist.

7. Verfahren nach einem der vorhergehenden Ansprüche, wobei der erste Interferenztoleranzparameter eine Pro-Probe-Dauer umfasst, die mit jeder Probe der ersten Abstandsschätzungssitzung assoziiert ist, wobei jede Probe eine von einer Sendezeit und einer Empfangszeit eines entsprechenden Pakets der Mehrzahl von Paketen angibt.

8. Verfahren nach einem der vorhergehenden Ansprüche, ferner umfassend:

Identifizieren eines zweiten Interferenztoleranzparameters zur Abstandsschätzung an der ersten Vorrichtung (102); und
für die erste Abstandsschätzungssitzung:
in Reaktion auf das Bestimmen einer zweiten Zeitüberschreitungsbedingung basierend auf dem zweiten Interferenztoleranzparameter Beenden der ersten Abstandsschätzungssitzung, ohne das Senden und Empfangen der Mehrzahl von Paketen abzuschließen.

9. Verfahren nach einem der vorhergehenden Ansprüche, wobei das Identifizieren des ersten Interferenztoleranzparameters ein Empfangen des ersten Interferenztoleranzparameters von der zweiten Vorrichtung zum Initiieren der ersten Abstandsschätzungssitzung umfasst.

10. Vorrichtung zur drahtlosen Entfernungsmessung, umfassend:

ein Funkgerät (422), das zum Senden und Empfangen einer Mehrzahl von Paketen konfiguriert ist;
einen Zähler (425), der zum Generieren einer ersten Mehrzahl von Zählungen konfiguriert ist, wobei jede der ersten Mehrzahl von Zählungen eine Sendezeit eines entsprechenden Pakets angibt;
wobei der Zähler (425) ferner zum Generieren einer zweiten Mehrzahl von Zählungen konfiguriert ist, wobei jede der zweiten Mehrzahl von Zählungen eine Empfangszeit eines entsprechenden Pakets angibt;
einen Prozessor (428), der konfiguriert ist zum:

Identifizieren eines ersten Interferenztoleranzparameters (430) zur Abstandsschätzung an einer ersten Vorrichtung (102);
Definieren einer ersten Zeitüberschreitungsbedingung basierend auf dem ersten Interferenztoleranzparameter;
für eine erste Abstandsschätzungssitzung:

Initiieren des Sendens und Empfangens einer Mehrzahl von Paketen, um eine Mehrzahl von Flugzeitwerten zu generieren;

in Reaktion auf das Bestimmen, dass die erste Zeitüberschreitungsbedingung abgelaufen ist, Beenden der Abstandsschätzungssitzung ohne das Senden und Empfangen der Mehrzahl von Paketen abzuschließen; und

in Reaktion auf das Abschließen der ersten Abstandsschätzungssitzung:

Generieren eines effektiven Flugzeitwerts basierend auf einer Kombination der Mehrzahl von Flugzeitwerten; und

Identifizieren eines Abstands zwischen der ersten Vorrichtung (102) und einer zweiten Vorrichtung (104) basierend auf dem effektiven Flugzeitwert.

**11.** Vorrichtung nach Anspruch 10, wobei der erste Interferenztoleranzparameter eine Anzahl von Gesamtproben umfasst, wobei jede Probe eine von einer Sendezeit und einer Empfangszeit eines entsprechenden Pakets der Mehrzahl von Paketen angibt.

**12.** Vorrichtung nach Anspruch 10 oder 11, wobei der erste Interferenztoleranzparameter eine Anzahl von Gesamtproben umfasst, die mit einer ersten Frequenz assoziiert ist, wobei jede Probe eine von einer Sendezeit und einer Empfangszeit eines entsprechenden Pakets der Mehrzahl von Paketen angibt.

**13.** Vorrichtung nach Anspruch 12, wobei der Prozessor konfiguriert ist zum:
Ändern einer Sendefrequenz von der ersten Frequenz auf eine zweite Frequenz für die erste Abstandsschätzungssitzung in Reaktion auf das Senden der Anzahl von Proben, die mit der ersten Frequenz assoziiert ist.

**14.** Vorrichtung nach einem der Ansprüche 10 bis 13, wobei der erste Interferenztoleranzparameter eine Anzahl von Probenwiederholungen umfasst, wobei jede Probe eine von einer Sendezeit und einer Empfangszeit eines entsprechenden Pakets der Mehrzahl von Paketen angibt.

**15.** Vorrichtung nach einem der Ansprüche 10 bis 14, wobei der erste Interferenztoleranzparameter eine Gesamtdauer umfasst, die mit der ersten Abstandsschätzungssitzung assoziiert ist.

**Revendications**

**1.** Procédé de télémétrie sans fil comprenant les étapes suivantes :

identifier un premier paramètre de tolérance aux interférences pour l'estimation de la distance au niveau d'un premier dispositif (102) ;
définir une première condition de temporisation basée sur le premier paramètre de tolérance aux interférences ;
pour une première session d'estimation de la distance :

initier la transmission et la réception d'une pluralité de paquets pour générer une pluralité de valeurs de temps de vol ;
en réponse à la détermination de l'expiration de la première condition de temporisation, quitter la première session d'estimation de distance sans achever la transmission et la réception de la pluralité de paquets ; et
en réponse à l'achèvement de la première session d'estimation de la distance :

générer une valeur de temps de vol effective basée sur une combinaison de la pluralité des valeurs de temps de vol ; et
identifier une distance entre le premier dispositif (102) et un deuxième dispositif (104) sur la base de la valeur effective du temps de vol.

**2.** Procédé selon la revendication 1, dans lequel le premier paramètre de tolérance aux interférences comprend un nombre d'échantillons totaux, chaque échantillon indiquant l'un d'un temps de transmission et d'un temps de réception d'un paquet correspondant de la pluralité de paquets.

**3.** Procédé selon la revendication 1 ou la revendication 2, dans lequel le premier paramètre de tolérance aux interférences comprend un nombre d'échantillons associés à une première fréquence, chaque échantillon indiquant un temps de transmission et un temps de réception d'un paquet correspondant de la pluralité de paquets.

**4.** Procédé selon la revendication 3, comprenant en outre les étapes suivantes :
pour la première session d'estimation de la distance, changer une fréquence de transmission de la première fréquence à une deuxième fréquence en réponse à la transmission du nombre d'échantillons associés à la première fréquence.

**5.** Procédé selon l'une quelconque des revendications précédentes, dans lequel le premier paramètre de tolérance aux interférences comprend un nombre de réessais d'échantillons, chaque échantillon indiquant l'un d'un temps de transmission et d'un temps de réception d'un paquet correspondant de la pluralité de paquets.

6. Procédé selon l'une quelconque des revendications précédentes, dans lequel le premier paramètre de tolérance aux interférences comprend une durée totale associée à la première session d'estimation de distance.

7. Procédé selon l'une quelconque des revendications précédentes, dans lequel le premier paramètre de tolérance aux interférences comprend une durée par échantillon associée à chaque échantillon de la première session d'estimation de distance, chaque échantillon indiquant l'un d'un temps de transmission et d'un temps de réception d'un paquet correspondant de la pluralité de paquets.

8. Procédé selon l'une quelconque des revendications précédentes, comprenant en outre les étapes suivantes :

   identifier un deuxième paramètre de tolérance aux interférences pour l'estimation de la distance au niveau du premier dispositif (102) ; et
   pour la première session d'estimation de la distance :
   en réponse à la détermination de l'expiration de la deuxième condition de temporisation basée sur le deuxième paramètre de tolérance aux interférences, quitter la première session d'estimation de distance sans achever la transmission et la réception de la pluralité de paquets.

9. Procédé selon l'une quelconque des revendications précédentes, dans lequel l'identification du premier paramètre de tolérance aux interférences comprend de recevoir le premier paramètre de tolérance aux interférences à partir du deuxième dispositif pour initier la première session d'estimation de distance.

10. Dispositif de télémétrie sans fil comprenant :

    une radio (422) configurée pour transmettre et recevoir une pluralité de paquets ;
    un compteur (425) configuré pour générer une première pluralité de comptes, chacun de la première pluralité de comptes indiquant un temps de transmission d'un paquet correspondant ;
    le compteur (425) étant en outre configuré pour générer une deuxième pluralité de comptes, chacun de la deuxième pluralité de comptes indiquant un temps de réception d'un paquet correspondant ;
    un processeur (428) configuré pour :

    identifier un premier paramètre de tolérance aux interférences (430) pour l'estimation de la distance au niveau d'un premier dispositif (102) ;
    définir une première condition de temporisation basée sur le premier paramètre de tolérance aux interférences ;
    pour une première session d'estimation de la distance :

    initier la transmission et la réception d'une pluralité de paquets pour générer une pluralité de valeurs de temps de vol ;
    en réponse à la détermination de l'expiration de la première condition de temporisation, quitter la première session d'estimation de distance sans achever la transmission et la réception de la pluralité de paquets ; et
    en réponse à l'achèvement de la première session d'estimation de la distance :

    générer une valeur de temps de vol effective basée sur une combinaison de la première pluralité de valeurs de temps de vol ; et
    identifier une distance entre le premier dispositif (102) et un deuxième dispositif (104) sur la base de la valeur effective du temps de vol.

11. Dispositif selon la revendication 10, dans lequel le premier paramètre de tolérance aux interférences comprend un nombre d'échantillons totaux, chaque échantillon indiquant l'un d'un temps de transmission et d'un temps de réception d'un paquet correspondant de la pluralité de paquets.

12. Dispositif selon la revendication 10 ou la revendication 11, dans lequel le premier paramètre de tolérance aux interférences comprend un nombre d'échantillons associés à une première fréquence, chaque échantillon indiquant un temps de transmission et un temps de réception d'un paquet correspondant de la pluralité de paquets.

13. Dispositif selon la revendication 12, dans lequel le processeur est configuré pour :
    pour la première session d'estimation de la distance, changer une fréquence de transmission de la première fréquence à une deuxième fréquence en réponse à la transmission du nombre d'échantillons associés à la première fréquence.

14. Dispositif selon l'une quelconque des revendications 10 à 13, dans lequel le premier paramètre de tolérance aux interférences comprend un nombre de réessais d'échantillons, chaque échantillon indiquant l'un d'un temps de transmission et d'un temps de réception d'un paquet correspondant de la pluralité de paquets.

15. Dispositif selon l'une quelconque des revendications 10 à 14, dans lequel le premier paramètre de tolérance aux interférences comprend une durée totale associée à la première session d'estimation de distance.

100

MEASURING
DEVICE
102

105

DISTANCE

TIME OF FLIGHT

REFLECTOR
DEVICE
104

106

# FIG. 1

FIG. 2

EP 3 800 486 B1

**FIG. 3**

EP 3 800 486 B1

400

MEMORY
429

INTERFERENCE
TOLERANCE
PARAMETERS
430

PROCESSOR
428

COUNTERS
426

COUNTER
425

TX_TRIGGER          RX_TRIGGER

CLOCK
420

RADIO
422

# FIG. 4

INITIALIZE AND START MEASUREMENT (COMMUNICATE
INTERFERENCE TOLERANCE PARAMETERS)

500

540 — DATA COLLECTION STAGE

REQUESTED SAMPLES

!REQUESTED SAMPLES

542 — PRE-PROCESSING STAGE

ERROR

541 — REPORT RESULTS

DONE

POST-PROCESSING STAGE

DONE || ERROR

543 —

EP 3 800 486 B1

**FIG. 5**

600

START ToF
MEASUREMENT ⎯ 602

INITIALIZATION

SEND MEASUREMENT INDICATION.
PERFORM OSCILLATOR FREQUENCY
ALIGNMENT AND SHARE CANDIDATE ⎯ 604
PSEUDO-RANDOM FREQUENCY
HOPPING PATTERN WITH REFLECTOR
DEVICE

DATA COLLECTION

INITIALIZE/ INCREMENT
OPERATING ⎯ 606
FREQUENCY

MONITOR TIMEOUT
PERIODS BASED ON
INTERFERENCE ⎯ 615
TOLERANCE
PARAMETERS

REQUEST & COLLECT
TIMESTAMP COUNTS & AGC ⎯ 608
DATA

NO

YES

SAMPLESCOUNTER <
REQUESTEDSAMPLES ⎯ 610

TIMEOUT PERIOD
EXPIRED ⎯ 616

NO

YES

TAKE REMEDIAL
ACTION ⎯ 617

YES

FREQCOUNTER <
FREQHOPVECTORLENGTH ⎯ 612

NO

TO PROCESSING AND
REPORTING

# FIG. 6

FIG. 7

RT = 450US
#SAMPLES = 4
#RETRIES = 2
#SLOTSPERFREQUENCY (SPF) = 2

```
MEASURING                                    REFLECTOR
 DEVICE                                        DEVICE
```

SPF = 2

RETRIES = 2

FREQ A                                         FREQ A

801 —— START – #SAMPLES - #RETRIES - #SPF - MAXDURATION →

ACK

802 —— RANGING PACKET →                         SAMPLES = 1

RESPONSE PACKET ←—— 803

SPF = 1                                         SPF = 1

RANGING PACKET →

RESPONSE PACKET ←                               SAMPLES = 2

SPF = 2                                         SPF = 2

FREQ B                                         FREQ B

RANGING PACKET →                                SAMPLES = 3

RESPONSE PACKET ←

SPF = 1                                         SPF = 1

RANGING PACKET →                                SAMPLES = 4

RESPONSE PACKET ←

SPF = 2                                         SPF = 2

#SAMPLES REACHED                               #SAMPLES REACHED

804 —— MEASUREMENT DONE →

# FIG. 8

RT = 450US
#SAMPLES = 4
#RETRIES = 2
#SLOTSPERFREQUENCY (SPF) = 2

MEASURING DEVICE

REFLECTOR DEVICE

SHARE - #RETRIES - #FREQ - #SPF

ACK

FREQ A                    FREQ A

SPF = 2    RETRIES = 2        SPF = 2    RETRIES = 2

RANGING PACKET

RESPONSE PACKET                    SAMPLES = 1

SPF = 1                    SPF = 1

RANGING PACKET

RESPONSE PACKET                    SAMPLES = 2

FREQ B                    FREQ B

SPF = 2    RETRIES = 2        SPF = 2    RETRIES = 2

901
RETRY            RANGING PACKET            RETRY

902
SPF = 1    RETRIES = 1        SPF = 1    RETRIES = 1

903
RANGING PACKET

RESPONSE  PACKET                    SAMPLES = 3

FREQ C                    FREQ C

SPF = 2    RETRIES = 2        SPF = 2    RETRIES = 2

RANGING PACKET

RESPONSE PACKET                    SAMPLES = 4

#SAMPLES REACHED            #SAMPLES REACHED

904            MEASUREMENT DONE

# FIG. 9

RT = 450US
#SAMPLES = 10
#RETRIES = 2
#SLOTSPERFREQUENCY (SPF) = 5

FIG. 10

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030007473 A1
- US 20190181909 A1
- US 20070019771 A1